**Europäisches Patentamt**

**European Patent Office**

**Office européen des brevets**

(19)

(11) Veröffentlichungsnummer : **0 403 803 B1**

(12)

# EUROPÄISCHE PATENTSCHRIFT

(45) Veröffentlichungstag der Patentschrift :
**01.07.92 Patentblatt 92/27**

(51) Int. Cl.$^5$ : **B60G 17/01**

(21) Anmeldenummer : **90109423.5**

(22) Anmeldetag : **18.05.90**

(54) **Semi-aktives Fahrwerk.**

(30) Priorität : **20.06.89 DE 3920049**

(43) Veröffentlichungstag der Anmeldung :
**27.12.90 Patentblatt 90/52**

(45) Bekanntmachung des Hinweises auf die
Patenterteilung :
**01.07.92 Patentblatt 92/27**

(84) Benannte Vertragsstaaten :
**BE DE ES FR GB IT NL SE**

(56) Entgegenhaltungen :
**EP-A- 0 197 316**
**EP-A- 0 221 486**
**EP-A- 0 270 893**
**EP-A- 0 279 507**
**US-A- 4 696 489**

(73) Patentinhaber : **AUGUST BILSTEIN GMBH & CO KG**
**August-Bilstein-Strasse, Postfach 1151**
**W-5828 Ennepetal (DE)**

(72) Erfinder : **Huang, Zhen**
**Kleverplatz 6**
**W-5600 Wuppertal 1 (DE)**

EP 0 403 803 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Regelung für ein semiaktives Fahrwerk bei Kraftfahrzeugen nach dem Oberbegriff des Anspruchs 1. Die Abstützung von Fahrzeuggewichten geschieht bei Straßenfahrzeugen nicht nur über die räderangreifenden Einzelkräfte, sondern sie wird auch durch statischen oder dynamischen Auftrieb vorgenommen. In allen Fällen gemeinsames Problem ist die Schwingungsanregung des Fahrzeuges über die Räder durch Unregelmäßigkeiten der Fahrbahn. Bei Kraftfahrzeugen und damit Straßenfahrzeugen kommt diese Anregung durch eine Fortbewegung über die in gewissem Grad unvermeidbar unebene Straße zustande. Die resultierenden Fahrzeugschwingungen beeinträchtigen jedoch den Fahrkomfort und auch die Sicherheit des Fahrzeuges und beanspruchen somit die Insassen und das Ladegut.

Durch eine elastische Aufbaufederung und Dämpfung kann diese Beanspruchung reduziert werden, d. h., die auftretenden und eingeleiteten Schwingungen werden auf ihrem Weg zum Insassen mehr oder weniger absorbiert. Eine gewisse Vorfilterung geschieht z. B. durch den elastischen Reifen, der auf der Straße vorhandene stärkere Unebenheiten teilweise ausgleicht.

Die Wirksamkeit der Reduzierung von Aufbauschwingungen hängt im wesentlichen von dem den anzupassenden Fahrzeugparametern zur Verfügung stehenden Spielraum ab. Dieser Parameter ist für die Aufbaumasse wesentlich kleiner als für die Aufbaufederung und Dämpfung. Änderungen eines Federungsparameters oder Änderungen eines Schwingungsdämpfers am Fahrzeug verändern somit das Schwingungsverhalten des gesamten Fahrzeuges.

Ein Fahrzeug, das von den Straßenunebenheiten und damit den ihr folgenden Achsbewegungen viel ausgleicht und seine Fahrzeuginsassen deshalb nur geringen Bewegungen aussetzt, wird als komfortabel bezeichnet. Die verantwortliche Größe für den Schwingungskomfort ist also allgemein die auf den Fahrzeuginsassen eingeleitete Bewegung.

Mit der EP-A-O 270 893 ist eine Vorrichtung zur aktiven Fahrwerksregelung bei Kraftfahrzeugen bekanntgeworden. Mit dieser Anmeldung wird eine Niveauregelung in Verbindung mit zugeordneten aktiven oder semiaktiven Dämpfern und zusätzlichen passiven Feder- und Dämpferelementen angestrebt. Die Vorrichtung ist jedoch in ihrem Aufbau sehr aufwendig und stellt keine kostengünstige Lösung dar. Darüber hinaus ist die Anzahl der verwendeten Bauteile sehr hoch, dadurch können sich leichter Störungen in das System einschleichen. Für semiaktive Fahrwerke ist das Skyhook- Regelprinzip bekannt. Nach diesem Prinzip wird der Schwingungsdämpfer folgendermaßen gesteuert: Wenn Va x (Va - Vr) > 0 ist, wird das Bypassventil geschlossen. Der Schwingungsdämpfer arbeitet dann mit einer harten Kennung. Va stellt in diesem Falle die vertikale Aufbaugeschwindigkeit dar, Vr die vertikale Radgeschwindigkeit.

Wenn Va x (Va - Vr) < 0 ist, wird das Bypassventil geöffnet. Der Schwingungsdämpfer arbeitet dann mit einer weichen Kennung. Die genannte Aufbaugeschwindigkeit Va ist mittels Beschleunigungssensor durch Integration der Aufbaubeschleunigung aa zu ermitteln. Diese Ermittlung ist nicht nur sehr aufwendig, sondern die errechnete Aufbaugeschwindigkeit auch nicht genau genug für den anschließenden Regelvorgang.

Nach der gattungsbildenden US-A- 4 696 489 ist es bekannt als Sensoren für die Eingangssignale der Regelung zwischen der Radmasse und der Aufbaumasse einen Relativgeschwindigkeitssensor und an der Aufbaumasse einen Beschleunigungssensor anzuordnen, die jedoch nicht für eine Regelung nach dem Skyhook-Prinzip Verwendung finden.

Die Aufgabe der Erfindung ist es, eine Regelung für ein semiaktives Fahrwerk für Kraftfahrzeuge zu schaffen, die störunanfällig ist, in ihrem Aufbau einfach gehalten ist und für den Benutzer einen hohen Fahrkomfort bietet. Ferner soll die Regelung stufenlos einstellbar sein, um auch so einen höheren Fahrkomfort zu erzielen. Des weiteren soll die Regelung an einem regelbaren Schwingungsdämpfer und auch an einem kraftregelbaren Schwingungsdämpfer eingesetzt werden können.

Die Aufgabe wird durch die im Kennzeichen angegebenen Merkmale gelöst. Hierbei ist es wichtig, daß auf die Verwendung von z. B. Integrationsgliedern verzichtet worden ist, weil dadurch Verzögerungszeiten innerhalb der Regelkette oder des Regelkreises vermieden werden.

Die Relativgeschwindigkeit zwischen der Radmasse und der Aufbaumasse des Kraftfahrzeuges kann z. B. mit einem Geschwindigkeitssensor, wie in der EP-A- 0388671 (veräffentlicht am 26.09.90) beschrieben, gemessen werden. In einer zweiten Ausbildung wird ein kraftgeregelter Schwingungsdämpfer mit einem Proportionalventil verwendet, mißt der Kraftsensor die Aufbaumasse mit ihren Massenverteilungen.

Die Erfindung soll anhand von Ausführungsbeispielen, die in den Figuren dargestellt sind, näher erläutert werden. Es zeigt

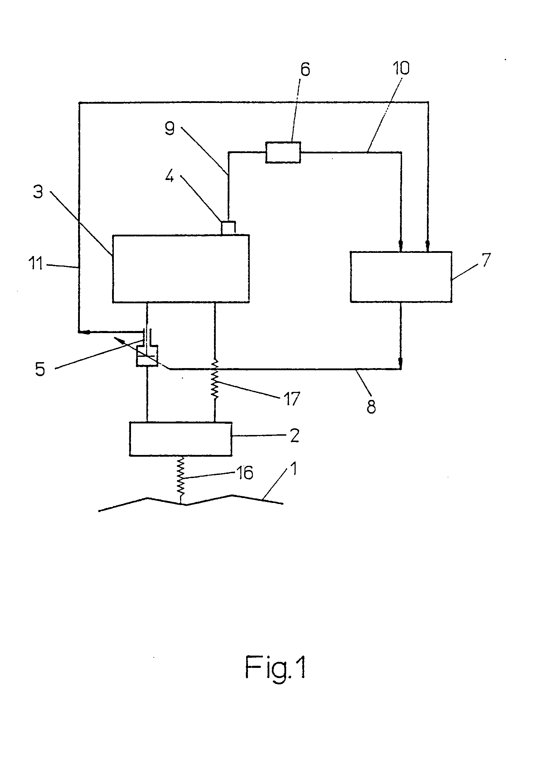

Fig. 1 Prinzipschaltbild für einen regelbaren Schwingungsdämpfer mit Bypassventil

Fig. 2 Prinzipschaltbild für einen kraftgeregelten Schwingungsdämpfer mit einem Proportionalventil.

Um die vorbeschriebenen Nachteile der bisher bekannten Systeme auszugleichen, wird bei dem erfindungsgemäßen Gegenstand nach folgenden Gesichtspunkten vorgegangen:

$a_a$ x (Va - Vr) > O, ist das Bypassventil geschlossen.

$a_a$ x (Va - Vr) < O, ist das Bypassventil offen.

In den Formeln ist $a_a$ die Aufbaubeschleunigung, Va die Aufbaugeschwindigkeit und Vr die vertikale Radgeschwindigkeit. Ist die Relativgeschwindigkeit > 0, so arbeitet der Schwingungsdämpfer in der Zugstufe und ist die Relativgeschwindigkeit < 0, so arbeitet der Schwingungsdämpfer in der Druckstufe.

Die Radaufhängung 16 hat Kontakt mit der Fahrbahn 1. An der Radaufhängung befindet sich die Radmasse 2, zwischen der und der Aufbaumasse 3 eine Federkraft 17 wirkt. Gleichzeitig wird über einen Relativgeschwindigkeitssensor 5 die Relativgeschwindigkeit zwischen der Radmasse 2 und der Aufbaumasse 3 gemessen. Das Meßsignal 11 wird über eine elektrische Verbindung an den Regler 7 weitergeleitet. Der an der Aufbaumasse 3 befindliche Beschleunigungssensor 4 mißt die Beschleunigung der Aufbaumasse. Über eine elektrische Verbindung wird das Meßsignal 9 an ein Filter 6 weitergeleitet. In diesem Filter werden aufkommende Störgrößen, die über einem gewissen Pegel liegen, herausgefiltert. Das gefilterte Meßsignal 10 geht an den Regler 7. Der Regler errechnet aus dem Beschleunigungsmeßsignal 10 und dem Relativgeschwindigkeitssignal 11 eine Stellgröße 8, die über eine elektrische Verbindung an den Schwingungsdämpfer gegeben wird. Das Regelverhalten des Schwingungsdämpfers wird somit von der Stellgröße 8 des Reglers 7 beeinflußt. Voraussetzung ist, daß der Schwingungsdämpfer regelbar ist. Bei dieser Art von Regelung kann die Kennung des Schwingungsdämpfers weich und hart eingestellt werden.

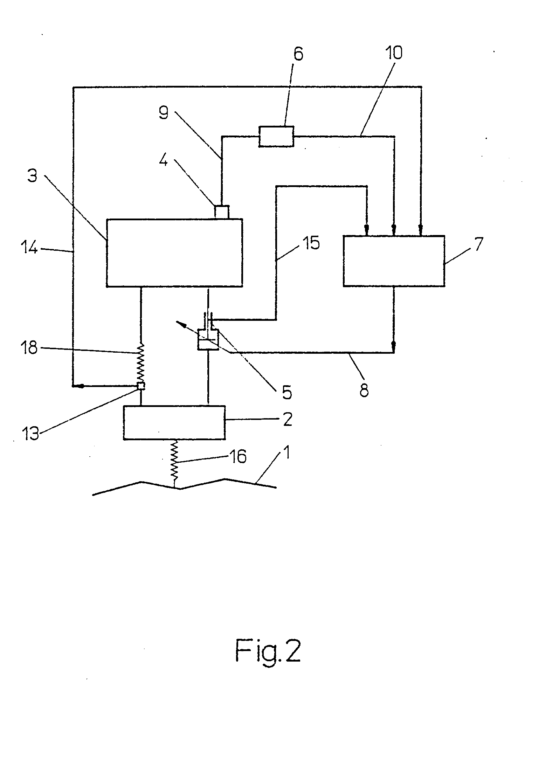

Bei dem in Fig. 2 dargestellten Schaltungsprinzip ist ein semiaktives Fahrwerk mit einem kraftregelbaren Schwingungsdämpfer verbunden. Dieser Prinzip stellt einen noch höheren Fahrkomfort dar, den hier wird die Radkraft bzw. die Massenverteilung mit einem Kraftsensor 13 gemessen. Bei der Geschwindigkeit V = 0 wird der momentane Wert abgespeichert. Gleichzeitig wird auch hier die vertikale Aufbaubeschleunigung mittels eines Beschleunigungssensors 4, der sich an der Aufbaumasse 3 befindet, gemessen. Das Meßsignal 9 geht an ein Filter 6, dessen gefiltertes Ausgangssignal 10 an einen Regler 7 geht. Der Kraftsensor 13, welcher die Federkraft an der Feder 18 zwischen der Radmasse 2 und der Aufbaumasse 3 mißt, liefert sein Meßsignal 14 über eine Verbindung ebenfalls an den Regler 7. Gleichzeitig wird jedoch auch die Relativgeschwindigkeit zwischen der Aufbaumasse 3 und der Radmasse 2 mittels eines Relativgeschwindigkeitssensors 5 gemessen. Dieses Meßsignal 15 geht über eine elektrische Verbindung an den Regler 7. Der Regler 7 errechnet aus den zur Verfügung stehenden Meßsignalen 10, 14, 15 und seinen abgespeicherten bzw. eingegebenen Werten eine Regelabweichung, die als Stellgröße 8 über eine Verbindung dem Schwingungsdämpfer zugeführt wird. Die Regelphilosophie für dieser Schaltungsprinzip lautet

$a_a$ (Va - Vr) < O, die Federdämpfungskraft geht gegen 0

$a_a$ (Va - Vr) > O, die Federdämpfungskraft = der Aufbaumasse x der Aufbaubeschleunigung

Mit dieser Schwingungsdämpferregelung ist eine stufenlose Einstellung möglich. Es kann die Dämpfungskraft gesteuert werden, d. h., die Dämpfung = Masse x Beschleunigung. Betrachtet man den Kennungsverlauf, so bedeutet eine niedrige Kurve eine geringe Dämpfungskraft.

Bezugszeichenverzeichnis

1. Fahrbahn
2. Radmasse
3. Aufbaumasse
4. Beschleunigungssensor
5. Relativgeschwindigkeitssensor
6. Filter
7. Regler
8. Stellgröße
9. Meßsignal der Aufbaubeschleunigung
10. gefiltertes Meßsignal der Aufbaubeschleunigung
11. Meßsignal der Relativgeschwindigkeit der Aufbaumasse
13. Kraftsensor
14. Meßsignal des Kraftsensors
15. Meßsignal des Geschwindigkeitssensors
16. Reifenfederung
17. Federkraft
18. Federkraft

**Patentansprüche**

1. Regelung für ein semiaktives Fahrwerk für Kraftfahrzeuge mit regelbaren Schwingungsdämpfern, welche mit steuerbaren Ventilen ausgerüstet sind, wobei zwischen der Radmasse (2) und der Aufbaumasse (3) ein Relativgeschwindigkeitssensor (5) und an der Aufbaumasse (3) ein Beschleunigungssensor (4) angeordnet sind, dadurch gekennzeichnet, daß das Relativgeschwindigkeitssignal (11, 15) direkt und das Beschleunigungssignal (9) über einen Filter (6) einem Regler (7) zugeführt werden, daß der Regler (7) das Produkt $a_a$ x $(V_a - V_R)$ bildet, wobei $a_a$ die Aufbaubeschleunigung und $V_a - V_R$ die Relativgeschwindigkeit von Aufbau und Rad sind, und daß der Regler (7) dem Schwingungsdämpfer eine Stellgröße (8) in der Form liefert, daß das Bypassventil bei positivem Produkt geschlossen wird und bei negativem Produkt geöffnet wird.

2. Regelung nach Anspruch 1, dadurch gekennzeichnet, daß die Meßsignale (9, 10, 11, 15) und die Steuergröße (8) als elektrische Signale über elektrische Leitungen zum bzw. vom Regler übertragen werden.

3. Regelung nach Anspruch 1 oder Anspruch 2, dadurch gekennzeichnet, daß bei einem Schwingungsdämpfer mit Proportionalventil ein Kraftsensor (13) zwischen Radmasse (2) und Aufbaumasse (3) angeordnet ist, dessen Meßsignal (14) ebenfalls dem Regler (7) zugeführt wird und dieser dem Bypassventil eine Stellgröße (8) für eine beliebige Stellung zwischen geöffnet und geschlossen liefert.

**Claims**

1. Control for a semi-active chassis for motor vehicles, having controllable vibration dampers, which are equipped with controllable valves, characterised in that a relative speed sensor 5 is disposed between the wheel mass 2 and the body mass 3, and an acceleration sensor 4 is disposed on the body mass 3, the relative speed signal 15 is fed to the controller 7 directly and the acceleration signal 9 is fed to it by way of a filter 6, and the controller provides the vibration damper with an adjusting variable 8 in such a form that given a product, in accordance with the condition $a_a$ x $(V_a - V_R)$, wherein $a_a$ = body acceleration, $V_a$ = body speed and $V_R$ = wheel speed, > 0 the bypass valve is closed and given a product < 0 the bypass valve is opened.

2. Control as in claim 1, characterised in that the measurement signals 9, 10, 11, 14, 15 and the control variable 8 are transmitted as electric signals by way of electric lines to and/or from the regulator.

3. Control as in claim 1 or claim 2, characterised in that, in a vibration damper having a proportional valve, there is disposed between the wheel mass 2 and the body mass 3 a force sensor 13, the measurement signal 14 of which is also passed to the controller 7, which supplies the bypass valve with an adjusting variable 8 for an arbitrary position between open and closed.

**Revendications**

1. Régulation pour un mécanisme de roulement semi-actif pour véhicules avec amortisseurs de vibrations réglables, qui sont équipés de soupapes commandées, caractérisée en ce que, entre la masse de la roue 2 et la masse de la carrosserie 3 un capteur de vitesse relative 5, et sur la masse de la carrosserie 3 un capteur d'accélération 4, est disposé, le signal de vitesse relative 11 et le signal d'accélération 9 sont conduits, respectivement de manière directe et via un filtre 6, au dispositif de régulation 7, et celui-ci fournit à l'amortisseur de vibration une grandeur de réglage 8 de forme telle que, pour un produit défini par $a_a$ x $(V_a - V_R)$, dans lequel $a_a$ = accélération de la carrosserie, $v_a$ = vitesse de la carrosserie et $V_R$ = vitesse de la roue, la soupape de dérivation est fermée pour un produit > 0 et la soupape de dérivation est ouverte pour un produit < 0.

2. Régulation selon la revendication 1, caractérisée en ce que les signaux de mesure 9, 10, 11, 14, 15 et la grandeur de commande 8 sont transmis sous la forme de signaux électriques, via des canalisations électriques, au dispositif de régulation ou à partir de celui-ci.

3. Régulation selon la revendication 1 ou 2, caractérisée en ce que, pour un amortisseur de vibrations à soupape proportionnelle, un capteur de force 13 est disposé entre la masse de la roue 2 et la masse de la carrosserie 3, capteur dont le signal de mesure 14 est également conduit au dispositif de régulation 7, et celui-ci fournit à la soupape de dérivation une grandeur de réglage 8 pour une position quelconque entre les positions d'ouverture et de fermeture.

Fig.1

Fig.2